# EUROPEAN PATENT APPLICATION

(11) **EP 4 177 569 A1**
(43) Date of publication of application: **10.05.2023**
(21) Application number: 21838805.6
(22) Date of filing: 06.07.2021
(51) Int. Cl.: G01C 21/00, G05D 1/02

(54) **MAP GENERATION METHOD AND SYSTEM FOR SELF-MOVING DEVICE, AND AUTOMATIC WORKING SYSTEM**

(30) Priority: 06.07.2020 CN 202010639240
(71) Applicant: Positec Power Tools (Suzhou) Co., Ltd., Suzhou, Jiangsu 215123 (CN)
(72) Inventor: Emanuel Conti, 36015 Villimpenta (MN) (IT); DALFRA, Davide, 36015 Villimpenta (MN) (IT); Alessandro Berlato, 36015 Villimpenta (MN) (IT)
(74) Representative: Dentons UK and Middle East LLP
(86) International application number: PCT/CN2021/104730
(87) International publication number: WO 2022/007791

(57) **Abstract**

This application provides a map generation method and system for a self-moving device, and an automatic working system. The method includes: obtaining first coordinate data of a plurality of location points on a boundary of a working region of a self-moving device; determining second coordinate data of at least two location points of the plurality of location points; and aligning the first coordinate data of the plurality of location points to a coordinate system in which the second coordinate data is located by using the second coordinate data of the at least two location points, to generate a target map of the working region, where positioning precision of a first positioner configured to obtain the first coordinate data of the plurality of location points is higher than positioning precision of a second positioner configured to obtain the second coordinate data of the at least two location points. By using the foregoing method, the map of the working region of the self-moving device can be generated, and the precision of the map can be improved, so that the working precision of the self-moving device that plans a route according to the generated map can be further improved, which is beneficial to improving the user experience.

## Description

### BACKGROUND

### Technical Field

This application relates to the field of map generation technologies, and in particular, to a map generation method and system for a self-moving device, and an automatic working system.

### Background

Currently, self-moving devices that perform household functions such as floor cleaning and lawn cutting are readily available consumer products. Self-moving devices generally include lawn mowing robots, sweeping robots, automatic vacuum cleaners, and the like. Some self-moving devices use positioning systems such as the global positioning system (GPS), the BeiDou satellite navigation system, the global navigation satellite system (GLONASS), and the Galileo satellite navigation system to determine a map of a boundary of a working region and plan a route based on the obtained map, to realize specific functions in the working region.

However, since positioning precision of such positioning systems is not high, the obtained map is imprecise. As a result, the self-moving device working based on the map cannot work within an imprecise working range, causing a series of problems.

For the foregoing problem, no effective solution has been provided by now.

### SUMMARY

The embodiments of this specification provide a map generation method and system for a self-moving device, and an automatic working system, to resolve the problem in the related art that a map record of a working region of a self-moving device is imprecise.

The embodiments of this specification provide a map generation method for a self-moving device, including: obtaining first coordinate data of a plurality of location points on a boundary of a working region of a self-moving device; determining second coordinate data of at least two location points of the plurality of location points; and aligning the first coordinate data of the plurality of location points to a coordinate system in which the second coordinate data is located by using the second coordinate data of the at least two location points, to generate a target map of the working region, where positioning precision of a first positioner configured to obtain the first coordinate data of the plurality of location points is higher than positioning precision of a second positioner configured to obtain the second coordinate data of the at least two location points.

In any of the embodiments described here, the target map is used for defining the boundary of the working region, and the self-moving device obtains location information by using the second positioner and determines a location in the target map according to the location information, to work within the boundary.

In any of the embodiments described here, the obtaining first coordinate data of a plurality of location points on a boundary of a working region of a self-moving device includes: obtaining the first coordinate data of the plurality of location points by using the first positioner when the self-moving device moves along the boundary of the working region.

In any of the embodiments described here, the first positioner is located within a preset region in the working region.

In any of the embodiments described here, the obtaining the first coordinate data of the plurality of location points by using the first positioner when the self-moving device moves along the boundary of the working region includes: obtaining the first coordinate data of the plurality of location points by using the first positioner after the first positioner moves from a first location to a second location, where there is an obstacle between the first location and the self-moving device, and there is no obstacle between the second location and the self-moving device.

In any of the embodiments described here, the at least two location points meet a preset location condition, and the preset location condition is at least one of the following conditions: a distance between any two location points of the at least two location points is greater than a first preset distance; an angle formed by any two location points of the at least two location points and the first positioner is greater than a preset angle; and each location point of the at least two location points is located in an open region in the working region.

In any of the embodiments described here, the determining second coordinate data of at least two location points of the plurality of location points includes: obtaining a plurality of positioning signals corresponding to the at least two location points from a positioning system by using the second positioner, where the plurality of positioning signals include a plurality of positioning signals that are received from the positioning system and correspond to the at least two location points when the second positioner separately stays at the at least two location points for a preset period of time; and determining the second coordinate data of the at least two location points according to the plurality of positioning signals.

In any of the embodiments described here, the positioning system includes a satellite navigation system.

In any of the embodiments described here, the at least two location points include at least three location points; and correspondingly, the first coordinate data of the plurality of location points is aligned to a coordinate system in which the second coordinate data is located by using second coordinate data of the at least three location points, to generate a target map of the working region.

In any of the embodiments described here, the first positioner includes at least one of the following: an optical interferometer, a microwave interferometer, and a laser rangefinder.

The embodiments of this specification further provide a map generation system for a self-moving device, including: a first positioner, a second positioner, and a controller, where the first positioner is configured to obtain first coordinate data of a plurality of location points on a boundary of a working region of a self-moving device, where positioning precision of the first positioner is higher than positioning precision of the second positioner; the controller is communicatively connected to the first positioner and the second positioner; the second positioner is configured to determine second coordinate data of at least two location points of the plurality of location points; and the controller is configured to align the first coordinate data of the plurality of location points to a coordinate system in which the second coordinate data is located by using the second coordinate data of the at least two location points, to generate a target map of the working region.

In any of the embodiments described here, the second positioner is detachably mounted in the self-moving device, the second positioner is further configured to obtain location information of the self-moving device when being mounted in the self-moving device, and the self-moving device determines a location in the target map according to the location information, to work in the working region defined by the target map.

The embodiments of this specification further provide an automatic working system, including a self-moving device, where the self-moving device includes: a body; and a moving apparatus, configured to drive the self-moving device to move; and the automatic working system further includes a controller, the controller includes a first control apparatus mounted in the self-moving device, the first control apparatus is configured to control the moving apparatus to drive the self-moving device to move, and the automatic working system further includes: a signal receiver, electrically connected to the controller, and configured to receive first coordinate data of a plurality of location points on a boundary of a working region of the self-moving device that is obtained by a first positioner, where the signal receiver is further configured to receive second coordinate data of at least two location points of the plurality of location points that is obtained by a second positioner, the controller is configured to align the first coordinate data of the plurality of location points to a coordinate system in which the second coordinate data is located by using the second coordinate data of the at least two location points, to generate a target map of the working region, and positioning precision of the first positioner is higher than positioning precision of the second positioner.

In any of the embodiments described here, the second positioner is configured to be mounted on the body, and is further configured to determine location data of the self-moving device during operating; and the first control apparatus is further configured to compare the location data with coordinate data on the target map, to control the self-moving device to move in the working region.

In any of the embodiments described here, the first control apparatus is further configured to obtain a distance between the self-moving device and the boundary of the working region according to the location data and the coordinate data on the target map, and control the self-moving device to return to move within the boundary when it is determined that the distance is less than a first preset distance.

In any of the embodiments described here, the first preset distance is greater than or equal to a deviation, from the distance, caused by a positioning error of the second positioner.

The embodiments of this specification further provide a computer device, including a processor and a memory configured to store instructions executable by the processor, where the processor, when executing the instructions, implements the steps of the map generation method for a self-moving device according to any one of the foregoing embodiments.

The embodiments of this specification further provide a computer-readable storage medium, storing computer instructions, where the instructions, when executed, implement the steps of the map generation method for a self-moving device according to any one of the foregoing embodiments.

In the embodiments of this specification, a map generation method for a self-moving device is provided, where the first coordinate data of the plurality of location points on the boundary of the working region of the self-moving device is obtained, and the second coordinate data of at least two location points of the plurality of location points is obtained, so that the target map of the working region can be generated based on the first coordinate data of the plurality of location points and the second coordinate data of at least two location points. In addition, since the positioning precision of the first positioner is higher than the positioning precision of the positioning system, the precision of the map can be improved, so that the working precision of the self-moving device that plans a route according to the generated map can be further improved, which is beneficial to improving the user experience. By using the foregoing solution, the technical problem that a map error of the working region of the existing self-moving device is relatively large, effectively improving the precision of the map.

### BRIEF DESCRIPTION OF THE DRAWINGS

The accompanying drawings illustrated herein are used to provide further understanding of this application and constitute a part of this application, but do not limit this application. In the accompanying drawings:
FIG. 1 is a schematic diagram of a self-moving device in an embodiment of this specification;
FIG. 2 is a block diagram of a self-moving device in an embodiment of this specification;
FIG. 3 is a flowchart of a map generation method for a self-moving device in an embodiment of this specification;
FIG. 4 is a schematic diagram of measuring a plurality of relative coordinates of a working region by using a first positioner in an embodiment of this specification;
FIG. 5 is a schematic diagram of an obstacle in a working region in an embodiment of this specification;
FIG. 6 is a schematic diagram of measuring a plurality of relative coordinates of a working region by using a first positioner after the first positioner moves from a first location to a second location when there is an obstacle between a self-moving device and the first positioner in an embodiment of this specification;
FIG. 7 is a schematic diagram of a target map obtained after adjusting a direction of a relative map according to a location point A and a location point B in an embodiment of this specification;
FIG. 8 is a schematic diagram of analysis of a working error of a self-moving device in the related art;
FIG. 9 is a schematic diagram of analysis of a working error of a self-moving device in an embodiment of this specification;
FIG. 10 is a schematic diagram of a map generation system for a self-moving device in an embodiment of this specification; and
FIG. 11 is a schematic diagram of a computer device in an embodiment of this specification.

### DETAILED DESCRIPTION

The principle and spirit of this application are described below with reference to several exemplary embodiments. It should be understood that these embodiments are only provided to enable a person skilled in the art to better understand and implement this application rather than to limit the scope of this application in any method. On the contrary, the embodiments are provided to make this application more thorough and complete, and the scope of the present disclosure can be fully conveyed to a person skilled in the art.

A person skilled in the art knows that the embodiments of this application may be implemented as a system, an apparatus, a device, a method or a computer program product. Therefore, this application may be specifically implemented in the following forms, that is, the form of complete hardware, complete software (including firmware, resident software, micro code, and the like) or a combination of hardware and software.

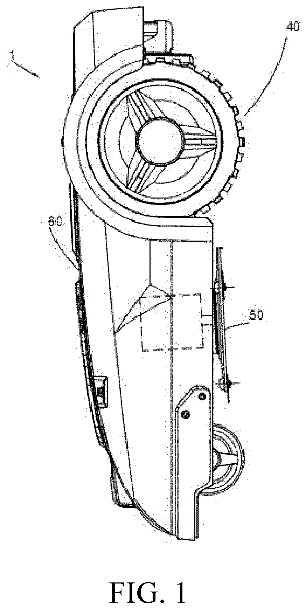

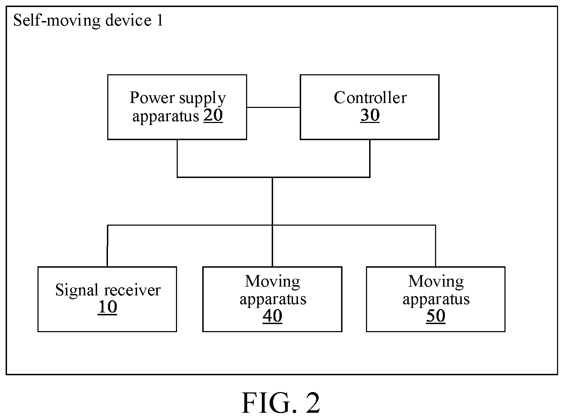

Referring to FIG. 1 and FIG. 2, FIG. 1 is a schematic diagram of a self-moving device in an embodiment of this specification, and FIG. 2 is a block diagram of a self-moving device in an embodiment of this specification. As shown in FIG. 1 and FIG. 2, a self-moving device 1 may include a signal receiver 10, a power supply apparatus 20, a control apparatus 30, a moving apparatus 40, a working apparatus 50, and a body 60. The power supply apparatus 20 provides working energy for each apparatus of the self-moving device 1. The control apparatus 30 is the control center of the self-moving device 1 and connected to other apparatuses, receives information sent from other apparatuses, and controls the self-moving device 1 to perform various actions or tasks such as moving, working, returning to a base station, and charging. The control apparatus 30 may further include an evaluation unit, a memory, and the like. The signal receiver 10 is electrically connected to the control apparatus 30 for sending a received signal to the control apparatus 30. The signal receiver 10 may be disposed separately from the control apparatus 30, or may be a part of the control apparatus 30.

The moving apparatus 40 includes a motor located in the self-moving device 1 and rollers driven by the motor, is configured to receive instructions from the control apparatus, and is powered by the power supply apparatus 20 to drive the self-moving device 1 to automatically move on the ground or other working surfaces. In this embodiment, the moving apparatus 40 further includes two driving wheels located on two sides of the self-moving device 1, two driving motors respectively connected to the two driving wheels, and one or two support wheels located at a front portion of the self-moving device 1. With such a configuration, a traveling speed and a direction of the moving apparatus 40 can be controlled by controlling speeds of the two driving wheels and a speed difference, so that moving and steering of the self-moving device 1 are flexible and precise. The moving apparatus 40 may have other composition forms. For example, the moving apparatus may be driving wheels and independent driving motors and independent steering motors connected thereto, or may be a track.

The working apparatus 50 is configured to perform specific work that the self-moving device 1 is responsible for. The working apparatus 50 generally includes a working motor and a working unit driven by the working motor. If the self-moving device 1 is a snowplow, the working unit is a snowplowing component that performs snowplowing work; and if the self-moving device 1 is an automatic lawn mower, the working unit is a cutting component that performs cutting work, for example, an output shaft, a cutting deck, or a blade. The details are not repeated herein. The following embodiments take an automatic lawn mower as an example for description.

In an example scenario, the automatic lawn mower may move around a lawn and cut the grass when traveling across the lawn. In preparation for using the automatic lawn mower, a boundary of the lawn to be mowed needs to be defined. In some embodiments, a user may define the boundary by pushing the lawn mower through a handle attached to the automatic lawn mower or a remote control. When the lawn mower is pushed to define the boundary, a first positioner (for example, an optical interferometer) may be used to measure first coordinate data of the lawn mower relative to the first positioner, where the first coordinate data may include a plurality of relative coordinates, that is, relative coordinates of a plurality of location points on boundary of the lawn. The first positioner may send the measured relative coordinates of the plurality of location points to a signal receiver in the automatic lawn mower. A second positioner (for example, a GPS positioner or a RTK positioner) is used to measure second coordinate data of at least two location points of the plurality of location points, where the second coordinate data is coordinate data of at least two location points in a local coordinate system when the automatic lawn mower works in a working region, and the coordinate data may be relative coordinate data or absolute coordinate data. The absolute coordinate data may be geographic coordinates.

The second positioner is detachably mounted in the automatic lawn mower. When the second positioner is separated from the automatic lawn mower, the second positioner may be held by hand to reach at least two location points of the plurality of location points. At the at least two location points, the second positioner receives a positioning signal sent by a positioning system to determine second coordinate data of the at least two location points, and sends the second coordinate data to the signal receiver of the automatic lawn mower. When the second positioner is mounted on the automatic lawn mower, the automatic lawn mower moves to the at least two location points of the plurality of location points. When the lawn mower is at the at least two location points, the second positioner receives a positioning signal sent by the positioning system to determine second coordinate data of the at least two location points, and sends the second coordinate data to the signal receiver of the automatic lawn mower. The signal receiver is electrically connected to the control apparatus, and the control apparatus aligns the first coordinate data to the coordinate system in which the second coordinate data is located, that is, the local coordinate system in which the automatic lawn mower works, according to the second coordinate data obtained from the signal receiver, to generate a target map of the working region. The positioning precision of the first positioner is higher than the positioning precision of the second positioner. The control apparatus in the automatic lawn mower may control the self-moving device to move on the lawn and cut the grass on the lawn according to the generated target map, to complete a designated mowing task.

More specifically, the automatic lawn mower may plan a route according to the working region set by the user, so that the automatic lawn mower is limited to the lawn or other proper regions, to avoid damaging a non-grassed region of the yard or intruding into a territory of a neighbor.

The first coordinate data of the plurality of location points on the boundary of the working region may include coordinates of each location point of the plurality of location points on the boundary of the working region relative to a reference point. The reference point may be a location selected inside or outside the working region as a coordinate origin. The coordinate data of the plurality of location points may be coordinates of the plurality of location points on the boundary of the working region in a coordinate system with the reference point as the coordinate origin. There may be one or more reference points, and the plurality of location points on the boundary of the working region may include first plurality of location points and second plurality of location points. For example, the coordinate data of the plurality of location points may include relative coordinates of the first plurality of location points on the boundary relative to a first reference point and relative coordinates of the second plurality of location points on the boundary relative to a second reference point.

In some embodiments, the first coordinate data of the plurality of location points on the boundary of the working region may be obtained by the first positioner, that is, coordinates of each location point of the plurality of location points on the boundary relative to the first positioner are measured. The location of the first positioner is the reference point. That is, a coordinate system may be established with the location of the first positioner as an origin, and coordinates of each location point of the plurality of location points on the boundary of the working region may be measured in the coordinate system.

The automatic lawn mower may obtain the first coordinate data of the plurality of location points on the boundary of the working region from the first positioner. In some embodiments, after the first positioner measures the first coordinate data of the plurality of location points on the boundary of the working region, the first positioner may automatically send the measured first coordinate data to the automatic lawn mower. In some embodiments, the automatic lawn mower may send an obtaining request to the first positioner, and the first positioner may send the measured first coordinate data to the automatic lawn mower in response to the obtaining request.

In some embodiments, the second positioner may be an apparatus disposed independently of the automatic lawn mower, the automatic lawn mower may send an obtaining request to the second positioner, and the second positioner sends the second coordinate data of the at least two location points of the plurality of location points to the automatic lawn mower in response to the obtaining request. In another example, after determining the second coordinate data of at least two location points, the second positioner may automatically send the determined second coordinate data to the automatic lawn mower.

The positioning precision of the first positioner configured to obtain the first coordinate data of the plurality of location points is higher than the positioning precision of the second positioner configured to obtain the second coordinate data of the at least two location points. For example, the positioning precision of the second positioner is at the centimeter level, and the positioning precision of the first positioner is at the millimeter level. Since the positioning precision of the first positioner is higher than the positioning precision of the second positioner, the precision of the map of the working region generated by aligning the first coordinate data of the plurality of location points to the coordinate system in which the second coordinate data is located by using the second coordinate data of the at least two location points of the plurality of location points obtained by the second positioner is higher than the precision of the map obtained simply by using the second positioner, thereby further improving the working precision of the self-moving device that plans a route according to the generated map, which is beneficial to improving the user experience. In addition, compared with using only the first positioner with high positioning precision, the positioning algorithm of the method in this embodiment is simple, which can reduce costs.

In some embodiments of this specification, the first positioner may include at least one of the following: an optical interferometer, a microwave interferometer, and a laser rangefinder. The positioning precision of the first positioner is relatively high. For example, the precision of the first positioner may be at the millimeter level or micron level. The laser rangefinder may be a two-dimensional laser rangefinder or a three-dimensional laser rangefinder. The optical interferometers, the microwave interferometer, and the two-dimensional or three-dimensional laser rangefinder may all measure distances and angles. The first positioner in the foregoing embodiments is only exemplary, and this specification is not limited thereto.

In some embodiments of this specification, the positioning system includes a satellite positioning system, and may further include one of the following: the BeiDou satellite navigation system, the GLONASS system, the Galileo satellite navigation system, the GPS system, the DGPS system, the RTK system, and the ARTK system. Generally, the positioning precision of the positioning system is lower than the measurement precision of the first positioner. For example, the precision of the positioning system may be at the meter level or centimeter level. The positioning system in the foregoing embodiments is only exemplary, and this specification is not limited thereto.

In some embodiments of this specification, the first positioner may be located in a preset region of the working region. In any of the embodiments described here, the preset region is a central region of the working region. The central region refers to a region close to the center of the working region. The first positioner is disposed at a location close to the center of the region, so that the measurement error of the first coordinate data of the plurality of location points can be effectively reduced, and the precision of the generated map can be improved.

In some embodiments, for a regular working region, such as a circular working region, a center of the working region is a center of a circle. The central region of the working region may be a circular region less than a preset distance from the center of the circle. The preset distance may be set according to the actual situation, for example, set to one-half or one-third of a radius of the working region.

In some embodiments, for an irregular working region, the center of the working region may be a center of gravity of the corresponding shape of the region. For example, the central region of the working region may be a circular region less than a preset distance from the center. In another example, the working region may be a region that has the same shape as the working region but is reduced in size.

In some embodiments of this specification, the obtaining the first coordinate data of the plurality of location points by using the first positioner when the self-moving device moves along the boundary of the working region may include: obtaining the first coordinate data of the plurality of location points by using the first positioner after the first positioner moves from a first location to a second location, where there is an obstacle between the first location and the self-moving device, and there is no obstacle between the second location and the self-moving device.

Specifically, when the self-moving device moves along the boundary, the first coordinate data of the plurality of location points on the boundary of the working region may be obtained by using the first positioner. That is, a plurality of relative coordinates of the self-moving device relative to the first positioner are measured. The first positioner may be disposed at a first location. The first location may be inside the working region or outside the working region. Before a relative coordinate of the self-moving device is measured, it may first be determined whether there is an obstacle between the first location and the first positioner.

When it is determined that there is no obstacle between the first location and the first positioner, the first positioner may be used to measure the relative coordinates of the self-moving device relative to the first location.

When it is determined that there is an obstacle between the first location and the first positioner, the first positioner may be moved from the first location to the second location. There is no obstacle between the second location and the self-moving device. The second location may be inside the working region or outside the working region. The relative coordinates of the self-moving device relative to the second location are then measured by using the moved first positioner.

In some embodiments, when the first positioner is at the first location, a first group of relative coordinates of a first group of location points on the boundary of the working region relative to the first location may be measured. There is no obstacle between each location point in the first group of location points and the first location. When the first positioner is at the second location, a second group of relative coordinates of a second group of location points on the boundary of the working region relative to the second location may be measured. There is no obstacle between each location point in the second group of location points and the second location. The first group of location points and the second group of location points each include at least two location points selected. Coordinate data of the first group of location points in the coordinate system in which the second coordinate data is located may be determined according to the first group of relative coordinates and the second coordinate data of the at least two location points. Coordinate data of the second group of location points in the coordinate system in which the second coordinate data is located may be determined according to the second group of relative coordinates and the second coordinate data of the at least two location points. A target map of the working region may be generated according to the coordinate data of the first group of location points in the coordinate system in which the second coordinate data is located and the coordinate data of the second group of location points in the coordinate system in which the second coordinate data is located.

In some embodiments, when the first positioner is at the first location, a first group of relative coordinates of a first group of location points on the boundary of the working region relative to the first location may be measured. There is no obstacle between each location point in the first group of location points and the first location. When the first positioner is at the second location, a second group of relative coordinates of a second group of location points on the boundary of the working region relative to the second location may be measured. There is no obstacle between each location point in the second group of location points and the second location. Relative coordinates of the second location relative to the first location may be further measured. Based on the second group of relative coordinates and the relative coordinates of the second location relative to the first location, relative coordinates of the second group of location points relative to the first location may be determined. The first group of location points may include at least two location points selected. Coordinate data of the first group of location points in the coordinate system in which the second coordinate data is located and coordinate data of the second group of location points in the coordinate system in which the second coordinate data is located may be determined based on the first group of relative coordinates, the relative coordinates of the second group of location points relative to the first location, and the second coordinate data of the at least two location points. A target map of the working region may be generated according to the coordinate data of the first group of location points in the coordinate system in which the second coordinate data is located and the coordinate data of the second group of location points in the coordinate system in which the second coordinate data is located.

In the foregoing embodiment, the example in which the first positioner is disposed at the first location and the second location is taken for description, but this specification is not limited thereto. It can be understood that the foregoing embodiment may be adaptively extended to a case that the first positioner includes three or more locations.

In other embodiments, a radar-based first positioner may be used to bypass obstacles to measure first coordinate data of the plurality of location points at the boundary of the working region.

In the embodiments of this specification, at least two location points may be selected from the plurality of location points, and second coordinate data of the at least two location points is then determined. The at least two location points selected satisfy a preset location relationship. In any of the embodiments described here, the preset location relationship is that a distance between any two location points of the at least two location points is greater than a first preset distance, where the first preset distance may be set according to the actual working region. At least two location points that are far away from each other are selected to improve the precision of the target map. At least two location points that are far away from the first positioner are selected to improve the precision of the target map. In still another embodiment, the preset location relationship is that an angle formed by any two location points of the at least two location points and the first positioner is greater than a preset angle, where the angle formed by the two location points and the first positioner is an absolute value of a difference between a first angle of the first location point relative to the first positioner and a second angle of the second location point relative to the first positioner. The preset angle may be set to 100°, 120°, 150°, 180°, or the like. Certainly, the preset angle may be alternatively set to other suitable angles. In other embodiments, the preset angle may be set according to a quantity of the at least two location points. For example, when the at least two location points include five location points, the preset angle may be set to 60°. At least two location points with relatively large angles between each other are selected to improve the precision of the target map. In still another embodiment, the preset location relationship is that each location point of the at least two location points is located in an open region in the working region. The open region may refer to a region in the working region where the signal of the positioning system is strong, for example, a region in the working region without shelter. At least two location points in the open region are selected, so that the precision of the second coordinate data of the at least two location points can be improved, thereby improving the precision of the target map.

In some embodiments of this specification, the determining second coordinate data of at least two location points of the plurality of location points may include: obtaining a plurality of positioning signals corresponding to each location point of the at least two location points from a positioning system by using the second positioner, where the plurality of positioning signals include a plurality of positioning signals that are received from the positioning system and correspond to each location point when the second positioner separately stays at each location point of the at least two location points for a preset period of time; and determining second coordinate data corresponding to each location point according to the plurality of positioning signals corresponding to each location point. For example, the preset period of time may be set to 1 minute, 3 minutes, 5 minutes, or the like. In the process in which the second positioner stays at each location point of the at least two location points for the preset period of time, the second positioner may receive a plurality of positioning signals corresponding to each location point sent by the positioning system, and determine a plurality of coordinates corresponding to each location point according to the plurality of positioning signals corresponding to each location point of the at least two location points. After determining the plurality of coordinates corresponding to each location point, the second positioner may determine second coordinate data corresponding to each location point according to the plurality of coordinates corresponding to each location point. For example, the second coordinate data of each location point is determined according to the plurality of coordinates corresponding to each location point by using an averaging method, a least square method, or a random sampling consistency method.

In the foregoing embodiment, the second positioner determines the second coordinate data corresponding to each location point according to the plurality of positioning signals corresponding to each location point of the at least two location points, and then the automatic lawn mower can directly obtain the second coordinate data corresponding to each location point from the second positioner. This application is not limited thereto. In other embodiments, the automatic lawn mower may determine the second coordinate data corresponding to each location point according to the plurality of coordinates corresponding to each location point obtained by the second positioner.

Through the foregoing method, the second positioner is controlled to stay at each location point for a long time and obtain the plurality of positioning signals corresponding to each location point, the plurality of coordinates corresponding to each location point are determined, and the final second coordinate data of each location point is determined according to the plurality of coordinates of each location point, which can effectively improve the precision of the geographic coordinates, thereby improving the precision of the map.

In some embodiments of this specification, the at least two location points include a first location point and a second location point; and correspondingly, the aligning the first coordinate data of the plurality of location points to a coordinate system in which the second coordinate data is located by using the second coordinate data of the at least two location points, to generate a target map of the working region may include: determining coordinates of the plurality of location points in the coordinate system in which the second coordinate data is located according to second coordinate data of the first location point and the second location point, to generate the target map of the working region.

Specifically, when the at least two location points include the first location point and the second location point, geographic coordinates corresponding to each location point of the plurality of location points can be determined according to geographic coordinates (that is, the second coordinate data) of the first location point and the second location point and the first coordinate data (that is, the relative coordinates of the plurality of location points) of the plurality of location points on the boundary of the working region. For example, for a specific location point, geographic coordinates corresponding to the location point may be calculated according to relative coordinates of the location point, the geographic coordinates and relative coordinates of the first location point, and the geographic coordinates and relative coordinates of the second location point. The target map of the working region may be generated based on the geographic coordinates corresponding to each location point of the plurality of location points.

In some embodiments of this specification, the at least two location points include at least three location points; and correspondingly, the first coordinate data of the plurality of location points is aligned to a coordinate system in which the second coordinate data is located by using second coordinate data of the at least three location points, to generate a target map of the working region.

Specifically, when the at least two location points include at least three location points, geographic coordinates corresponding to each location point of the plurality of location points can be determined according to geographic coordinates (that is, the second coordinate data) of the at least three location points and the first coordinate data (that is, the relative coordinates of the plurality of location points) of the plurality of location points on the boundary of the working region. For example, for a location point, geographic coordinates corresponding to the location point may be calculated according to relative coordinates of the location point, and the geographic coordinates and relative coordinates of the at least three location points. The target map of the working region may be generated according to the geographic coordinates corresponding to each location point of the plurality of location points.

In some embodiments of this specification, the at least three location points include a first location point, a second location point, and a third location point. Correspondingly, first coordinates of the plurality of location points are determined according to geographic coordinates of the first location point and geographic coordinates of the second location point; second coordinates of the plurality of location points are determined according to the geographic coordinates of the first location point and geographic coordinates of the third location point; third coordinates of the plurality of location points are determined according to the geographic coordinates of the second location point and the geographic coordinates of the third location point; and geographic coordinates of the plurality of location points are determined according to the first coordinates, the second coordinates, and the third coordinates.

Specifically, when the at least three location points include the first location point, the second location point, and the third location point, for a location point, first coordinates corresponding to the location point may be determined according to relative coordinates of the location point, and relative coordinates and geographic coordinates of the first location point and the second location point. The first coordinates may be first geographic coordinates. Second coordinates corresponding to the location point may be determined according to the relative coordinates of the location point, and relative coordinates and geographic coordinates of the first location point and the third location point. The second coordinates may be second geographic coordinates. Third coordinates corresponding to the location point may be determined according to the relative coordinates of the location point, and relative coordinates and geographic coordinates of the second location point and the third location point. The third coordinates may be third geographic coordinates.

After the first coordinates, the second coordinates, and the third coordinates corresponding to the location point are determined, geographic coordinates corresponding to the location point may be determined based on the first coordinates, the second coordinates, and the third coordinates corresponding to the location point. For example, the geographic coordinates of the location point may be determined based on the first coordinate, the second coordinate, and the third coordinate corresponding to the location point by using the averaging method. For example, the geographic coordinates of the location point may be determined based on the first coordinate, the second coordinate, and the third coordinate corresponding to the location point by using the least square method. For example, the geographic coordinates of the location point may be determined based on the first coordinate, the second coordinate, and the third coordinate corresponding to the location point by using the random sampling consistency method. According to the method in the foregoing embodiment, geographic coordinates of each location point of the plurality of location points on the relative map are determined based on geographic coordinates of at least three location points, which can effectively improve the precision of the determined geographic coordinates.

It can be understood that the foregoing method can be extended to a case of more than three location points. Geographic coordinates corresponding to each location point of the plurality of location points can be determined based on the geographic coordinates of any two location points of more than three location points, to obtain a plurality of geographic coordinates corresponding to each location point, and final geographic coordinates corresponding to each location point can be determined based on the plurality of geographic coordinates corresponding to each location point.

In some embodiments of this specification, the second positioner is further configured to determine location data of the self-moving device during working; and the control apparatus is further configured to compare the location data with coordinate data on the target map, to control the self-moving device to move in the working region.

Specifically, the second positioner may be located in the self-moving device, and when the self-moving device works, the second positioner may determine the location data of the self-moving device. For example, when the self-moving device works, the second positioner may obtain a positioning signal from the positioning system, and determine the location data of the self-moving device according to the positioning signal. The control apparatus may obtain the location data of the self-moving device from the second positioner in real time, compare the obtained location data with coordinate data in the target map, and control the self-moving device to move in the working region according to a comparison result.

For example, the control apparatus may send an obtaining request to the second positioner in real time, and the second positioner may send the determined location data to the control apparatus in response to the obtaining request. In another example, the second positioner may automatically send the determined location data to the control apparatus in real time. The control apparatus may then determine whether the self-moving device is located within the boundary of the working region based on the obtained location data of the self-moving device and the generated target map of the working region, and control, when determining that the self-moving device is located on or outside the boundary of the working region, the self-moving device to move to within the boundary of the working region and move.

In some embodiments of this specification, the control apparatus is further configured to calculate a distance between the self-moving device and the boundary of the working region according to the location data and the coordinate data on the target map, and control the self-moving device to move within the boundary when it is determined that the distance is less than a first preset distance.

Specifically, the control apparatus may calculate the distance between the self-moving device and the boundary of the working region according to the location data of the self-moving device during operating and the target map. The control apparatus may determine whether the distance is less than the first preset distance, and when it is determined that the distance is less than the first preset distance, control the self-moving device to move within the boundary. The first preset distance may be a default distance in the control apparatus, or a distance preset by the user according to actual needs. For example, the first preset distance may be 0.1 m, 0.2 m or 0.5 m.

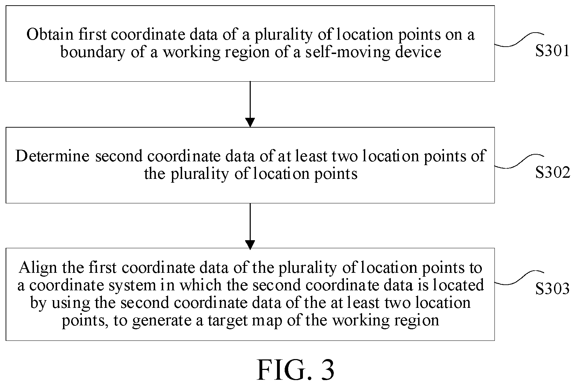

A description is made with reference to FIG. 3 through FIG. 9. However, it should be noted that the specific embodiment is only used for better describing this specification and does not constitute any undue limitation on this specification.

An embodiment of this specification provides a map generation method for a self-moving device. FIG. 3 is a flowchart of a map generation method for a self-moving device in an embodiment of this specification. Although this specification provides method operational steps or apparatus structures shown in the following embodiments or accompanying drawings, more or fewer operational steps or module units may be included in the methods or the apparatuses based on conventional efforts or without creative efforts. In the steps or structures in which no necessary causal relationship logically exists, the execution order of the steps or the module structure of the apparatus is not limited to the execution orders or module structures described in the embodiments of this specification or shown in the accompanying drawings. When the methods or module structures are applied to an apparatus or a terminal product in practice, sequential execution or parallel execution may be performed according to the methods or module structure connection shown in the embodiments or the accompanying drawings (for example, in a parallel processor or multi-thread processing environment, or even a distributed processing environment).

Specifically, as shown in FIG. 3, a map generation method for a self-moving device provided in an embodiment of this specification may include the following steps:
Step S301: Obtain first coordinate data of a plurality of location points on a boundary of a working region of a self-moving device.

A self-moving device (for example, an automatic lawn mower) may plan a route according to the working region set by the user, so that the self-moving device is limited to the lawn or other proper regions, to avoid damaging a non-grassed region of the yard or intruding into a territory of a neighbor.

The first coordinate data of the plurality of location points on the boundary of the working region may include coordinates of each location point of the plurality of location points on the boundary of the working region relative to a reference point. The reference point may be a location selected inside or outside the working region as a coordinate origin. In some embodiments, the first coordinate data of the plurality of location points on the boundary of the working region may be obtained by the first positioner, that is, coordinates of each location point of the plurality of location points on the boundary relative to the first positioner are measured. The location of the first positioner is the reference point. That is, a coordinate system (for example, a polar coordinate system) may be established with the location of the first positioner as an origin, and coordinates (for example, angles and distances in polar coordinates) of each location point of the plurality of location points on the boundary of the working region may be measured in the coordinate system.

The self-moving device may obtain, from the first positioner, the first coordinate data of the plurality of location points on the boundary of the working region of the self-moving device. In some embodiments, after the first positioner measures the first coordinate data of the plurality of location points on the boundary of the working region, the first positioner may automatically send the measured first coordinate data to the self-moving device. In some embodiments, the self-moving device may send an obtaining request to the first positioner, and the first positioner may send the measured first coordinate data to the self-moving device in response to the obtaining request.

Step S302: Determine second coordinate data of at least two location points of the plurality of location points.

In some embodiments, the second positioner is used to obtain the second coordinate data of at least two location points of the plurality of location points. The second positioner may be a GPS positioner, an RTK positioner, an ARTK positioner, a DGPS positioner, or the like. Certainly, the second positioner may be alternatively a beacon positioning module, such as an ultrasonic beacon or a UWB beacon, which is not limited herein.

In some embodiments, the second positioner may be an apparatus disposed independently of the self-moving device, or may be disposed in the self-moving device. The self-moving device may obtain, from the second positioner, the second coordinate data of at least two location points of the plurality of location points. For example, the self-moving device may send an obtaining request to the second positioner, and the second positioner sends the second coordinate data to the self-moving device in response to the obtaining request. In another example, after determining the second coordinate data of at least two location points, the second positioner may automatically send the data to the self-moving device.

The second coordinate data may be relative coordinates or absolute coordinates. The absolute coordinates may be geographic coordinates. The geographic coordinates may be spherical coordinates representing a location of a point on the ground in latitude and longitude. Certainly, other types of geographic coordinates may be used.

In some embodiments, a beacon positioning module may be used to obtain relative coordinates of at least two location points of the plurality of location points, and the first coordinate data of the plurality of location points is aligned to a coordinate system in which the relative coordinate data is located by using the relative coordinates of the at least two location points, to generate a target map of the working region.

In some embodiments, the GPS positioner, the RTK positioner, the ARTK positioner, or the DGPS positioner may be used to obtain absolute coordinates of at least two location points of the plurality of location points, and the first coordinate data of the plurality of location points is aligned to a coordinate system in which the absolute coordinate data is located by using the absolute coordinates of the at least two location points, to generate a target map of the working region.

The positioning precision of the first positioner configured to obtain the first coordinate data of the plurality of location points is higher than the positioning precision of the second positioner configured to obtain the second coordinate data of the at least two location points.

Step S303: Align the first coordinate data of the plurality of location points to a coordinate system in which the second coordinate data is located by using the second coordinate data of the at least two location points, to generate a target map of the working region.

After obtaining the first coordinate data of the plurality of location points and the second coordinate data of the at least two location points of the plurality of location points, a map generation apparatus may determine coordinates of the plurality of location points in the coordinate system in which the second coordinate data is located based on the first coordinate data of the plurality of location points and the second coordinate data of the at least two location points, to generate the target map of the working region. The target map of the working region may include second coordinate data of each location point of the plurality of location points on the boundary of the working region.

For example, for a target location point in the working region, the map generation apparatus may determine geographic coordinates of the target location point based on relative coordinates of the target location point and geographic coordinates and relative coordinates of at least two location points. In another example, the map generation apparatus may generate a relative map of the working region based on the first coordinate data of the plurality of location points, and then adjust the direction of the relative map based on geographic coordinates corresponding to each location point of the at least two location points, so that the relative map becomes a target map.

In some embodiments, after the target map of the working region is generated, the self-moving device may plan a working route according to the target map of the working region, and complete a working task specified by the user.

According to the method in the foregoing embodiment, the first coordinate data of the plurality of location points on the boundary of the working region of the self-moving device is obtained by using the first positioner, the second coordinate data of the at least two location points of the plurality of location points is determined based on the positioning system, and the obtained second coordinate data of the at least two location points and the first coordinate data of the plurality of location points are used to obtain the target map. In addition, since the positioning precision of the first positioner is higher than the positioning precision of the second positioner, the precision of the map can be improved, so that the working precision of the self-moving device that plans a route according to the generated map can be further improved, which is beneficial to improving the user experience.

In some embodiments of this specification, the self-moving device obtains location information by using the second positioner and determines a location in the target map according to the location information, to work within the boundary.

In some embodiments of this specification, the first positioner may be used to obtain first coordinate data of a plurality of location points when the self-moving device moves along the boundary of the working region, that is, coordinates of each location point of the plurality of location points on the boundary relative to the first positioner are measured.

In some embodiments of this specification, the first positioner is located in a preset region of the working region. In any of the embodiments described here, the preset region is a central region of the working region. The central region refers to a region close to the center of the working region. The first positioner is disposed at a location close to the center of the region, so that the measurement error of the first coordinate data of the plurality of location points can be effectively reduced, and the precision of the generated map can be improved.

In some embodiments of this specification, at least two location points may be selected from the plurality of location points, and second coordinate data of the at least two location points is then determined. The at least two location points selected satisfy a preset location relationship. In any of the embodiments described here, the preset location relationship is that a distance between any two location points of the at least two location points is greater than a first preset distance. In still another embodiment, the preset location relationship is that an angle formed by any two location points of the at least two location points and the first positioner is greater than a preset angle, where the angle formed by the two location points and the first positioner is an absolute value of a difference between a first angle of the first location point relative to the first positioner and a second angle of the second location point relative to the first positioner. In still another embodiment, the preset location relationship is that each location point of the at least two location points is located in an open region in the working region. The open region may refer to a region in the working region where the signal of the positioning system is strong, for example, a region in the working region without shelter. Through the foregoing method, the precision of the target map can be improved.

In some embodiments of this specification, the determining second coordinate data of at least two location points of the plurality of location points may include: obtaining a plurality of positioning signals corresponding to each location point of the at least two location points from a positioning system by using the second positioner, where the plurality of positioning signals include a plurality of positioning signals that are received from the positioning system and correspond to each location point when the second positioner separately stays at each location point of the at least two location points for a preset period of time; and determining second coordinate data corresponding to each location point according to the plurality of positioning signals corresponding to each location point.

In some embodiments of this specification, the at least two location points may include at least three location points, and the at least two location points include at least three location points; and correspondingly, the first coordinate data of the plurality of location points is aligned to a coordinate system in which the second coordinate data is located by using second coordinate data of the at least three location points, to generate a target map of the working region.

Specifically, the coordinate data of the plurality of location points in the coordinate system in which the second coordinate data is located may be determined based on second coordinate data of any two location points of the at least three location points and the first coordinate data of the plurality of location points respectively, to obtain a plurality of coordinate data corresponding to each location point of the plurality of location points. Based on the plurality of coordinate data corresponding to each location point, final coordinate data of each location point in the coordinate system in which the second coordinate data is located is determined by using the averaging method, the least square method, or the random sampling consistency method, to generate the target map of the working region. Through the foregoing method, the precision of the generated map can be effectively improved.

In some embodiments of this specification, the first positioner may include at least one of the following: an optical interferometer, a microwave interferometer, and a laser rangefinder.

In some embodiments of this specification, the positioning system may include one of the following: the BeiDou satellite navigation system, the GLONASS system, the Galileo satellite navigation system, the GPS system, the DGPS system, the RTK system, and the ARTK system.

In some embodiments of this specification, when the self-moving device moves along the boundary of the working region, the first positioner (for example, an optical or microwave interferometer) is used to measure relative coordinates of the plurality of location points on the boundary of the working region of the self-moving device, to obtain a plurality of relative coordinates (angles and distances)

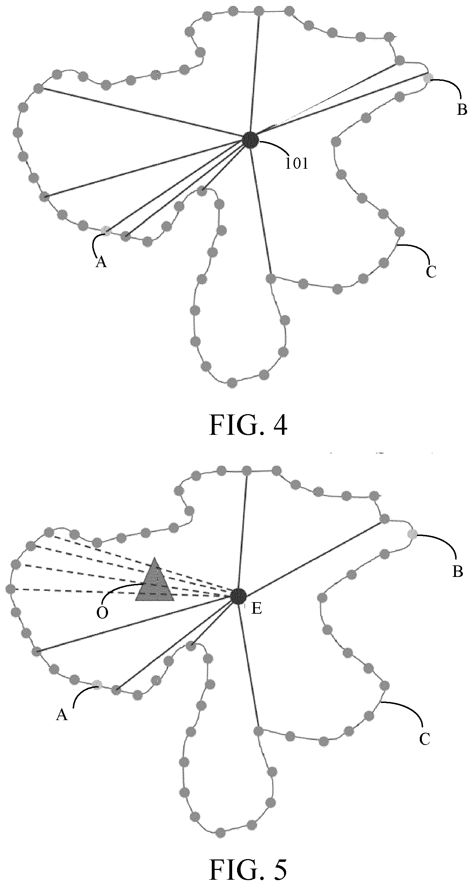

FIG. 4 is a schematic diagram of measuring relative coordinates of a plurality of location points on a boundary C of a working region by using a first positioner 101. In FIG. 4, the optical or microwave interferometer 101 is located in a central region of the working region. The optical or microwave interferometer 101 may measure relative coordinates of the plurality of location points on the boundary C relative to the optical or microwave interferometer. The plurality of location points include a location point A and a location point B. Second coordinate data of the location point A and the location point B may be determined using the second positioner.

FIG. 5 is a schematic diagram of an obstacle in the working region. In FIG. 5, the optical or microwave interferometer is at a first location E. An obstacle O exists between the first location E and some location points on the boundary C of the working region. In this case, a radar-based optical or microwave interferometer may be used to bypass the obstacle O. The optical or microwave interferometer may be further controlled to move from the first location to the second location.

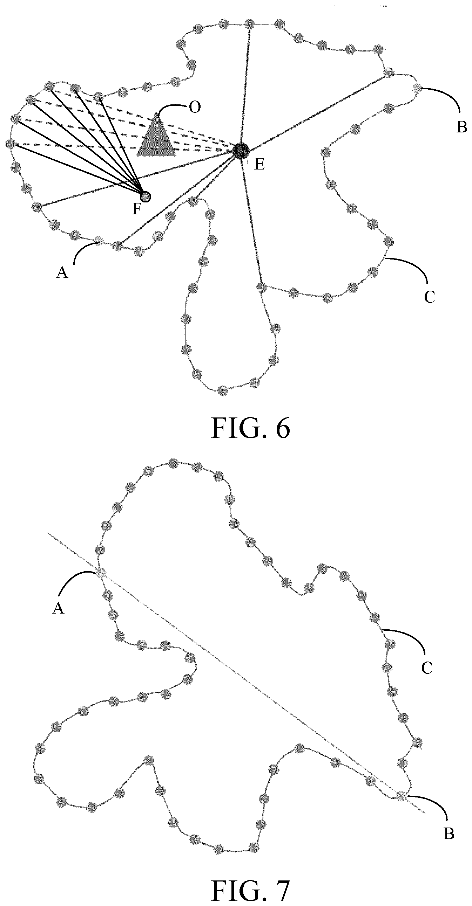

Referring to FIG. 6, FIG. 6 is a schematic diagram of controlling the optical or microwave interferometer to move from the first location E to a second location F when there is an obstacle between the self-moving device and the optical or microwave interferometer. In FIG. 6, for measurement of relative coordinates of location points on the boundary C of the working region that are spaced from the first location E with the obstacle O in between, the optical or microwave interferometer may be moved from the first location E to the second location F. The relative coordinates of such location points on the boundary C relative to the second location F are measured by using the moved optical or microwave interferometer.

Referring to FIG. 7, FIG. 7 is a schematic diagram of a target map obtained after adjusting a direction of a relative map according to a location point A and a location point B in an embodiment of this specification. The self-moving device may generate a relative map of the working region according to the relative coordinates of the plurality of location points, and then adjust the direction of the relative map based on geographic coordinates of at least two location points, so that the relative map becomes a target map.

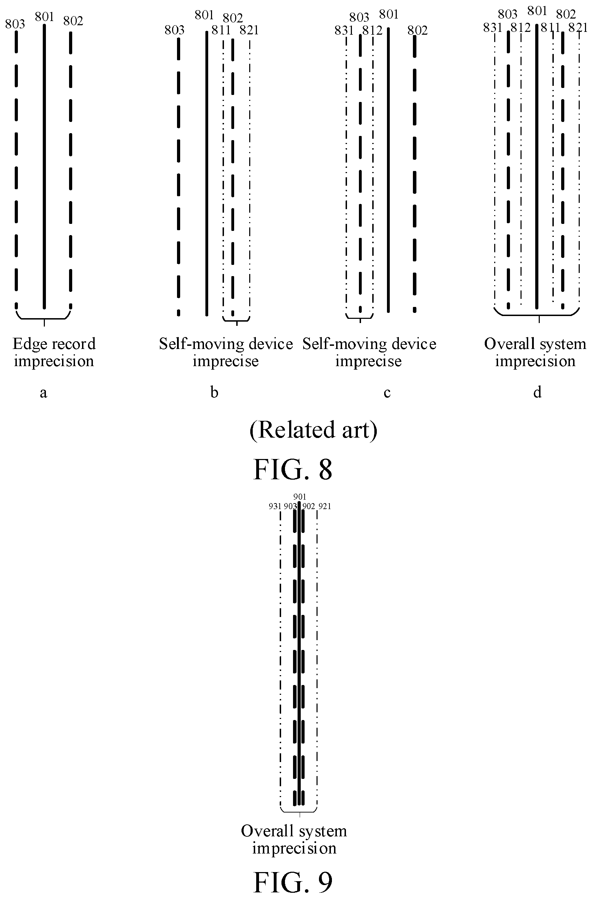

Referring to FIG. 8, FIG. 8 is a schematic diagram of analysis of a working error of a self-moving device in the related art. The working error of the self-moving device in the related art refers to an error when the self-moving device works based on a map generated by using the map generation method in the related art. In the map generation method in the related art, a map is generated only by using the second positioner, for example, a map is generated based on the GPS or RTK system, a in FIG. 8 shows boundary record imprecision of the map generation method in the related art. In a of FIG. 8, the solid line 801 is a boundary of an actual working region, the dotted line 802 and the dotted line 803 show boundaries recorded in the map generation method in the related art, and a range between the dotted line 802 and the dotted line 803 may represent boundary record imprecision. b of FIG. 8 shows working imprecision of a self-moving device when the self-moving device works according to the boundary recorded by the dotted line 802. A range between the dotted line 811 and the dotted line 821 in b of FIG. 8 may represent working imprecision of the self-moving device when the self-moving device works according to the boundary recorded by the dotted line 802. c of FIG. 8 shows working imprecision of the self-moving device when the self-moving device works according to the boundary recorded by the dotted line 803. A range between the dotted line 812 and the dotted line 831 in c of FIG. 8 may represent working imprecision of the self-moving device when the self-moving device works according to the boundary recorded by the dotted line 803. d in FIG. 8 shows overall system imprecision of working of the self-moving device when a map recording method in the related art is used. In d of FIG. 8, a range between the dotted line 831 and the dotted line 821 may represent overall system imprecision of working of the self-moving device.

Referring to FIG. 9, FIG. 9 is a schematic diagram of analysis of a working error of a self-moving device in an embodiment of this specification. In FIG. 9, the solid line 901 is a boundary of an actual working region, the dotted line 902 and the dotted line 903 show boundaries recorded by using the map generation method in the embodiments of this specification, and a range between the dotted line 902 and the dotted line 903 may represent boundary record imprecision of the map generation method in the embodiments of this specification. Based on the analysis similar to that in FIG. 8, in FIG. 9, a range between the dotted line 921 and the dotted line 931 may represent overall system imprecision when the self-moving device works based on a map generated by using the map generation method in the embodiments of this specification. Since the boundary record imprecision is greatly reduced by using the map generation method in the embodiments of this specification, the overall system imprecision of working of the self-moving device is greatly reduced. It can be seen from FIG. 8 and FIG. 9 that since the boundary record imprecision of the map generation method in the embodiments of this specification is close to zero, compared with the related art, the overall system imprecise is reduced by nearly 50% by using the map generation method in the embodiments of this specification.

In the foregoing embodiment, the relative coordinate data of each location point of the plurality of location points on the boundary of the working region is obtained, the geographic coordinates of at least two location points of the plurality of location points are determined, to generate the target map by using the geographic coordinates of at least two location points and the relative coordinate data of the plurality of location points obtained. The relative coordinate data of the plurality of location points is recorded by using a positioning technology in millimeters, so that error records introduced by positioning systems such as GPS or RTK can be almost zeroed. Therefore, the total error of positioning can be effectively reduced, and the working precision of the self-moving device that plans a route according to the generated map can be improved, which is beneficial to improving the user experience. For example, in some cases, the total positioning error can be reduced by 30%, 40%, or even close to 50%, so that the working precision can be increased by 30%, 40%, or even close to 50%.

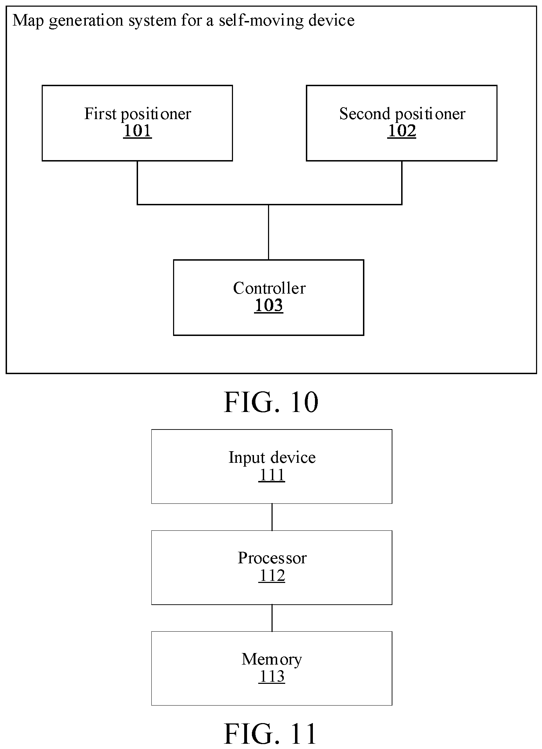

An embodiment of this specification provides a map generation system for a self-moving device. Since the problem-solving principle of the map generation system for a self-moving device is similar to the map generation method for a self-moving device, for the embodiment of the map generation system for a self-moving device, reference may be made to the embodiment of the map generation method for a self-moving device, and repeated parts are not described again. Referring to FIG. 10, FIG. 10 is a structural block diagram of a map generation system for a self-moving device. As shown in FIG. 10, the system includes: a first positioner 101, a second positioner 102, and a controller 103. The structure is described below.

The first positioner 101 is configured to obtain first coordinate data of a plurality of location points on a boundary of a working region of a self-moving device, where positioning precision of the first positioner 101 is higher than positioning precision of the second positioner 102.

The controller 103 is communicatively connected to the first positioner 101 and the second positioner 102.

The second positioner 102 is configured to determine second coordinate data of at least two location points of the plurality of location points. For example, the second positioner 102 may obtain positioning signals of at least two location points of the plurality of location points from the positioning system, and determine second coordinate data of the at least two location points according to the positioning signals.

The controller 103 is configured to align the first coordinate data of the plurality of location points to a coordinate system in which the second coordinate data is located by using the second coordinate data of the at least two location points, to generate a target map of the working region.

In some embodiments of this specification, the second positioner 102 may be detachably mounted in the self-moving device. When the second positioner 102 is mounted in the self-moving device, the second positioner 102 is further configured to obtain location information of the self-moving device, and the self-moving device may determine a location in the target map according to the location information, to work in the working region defined by the target map.

In some embodiments of this specification, the second positioner 102 may be disposed independently of the self-moving device.

An embodiment of this specification further provides an automatic working system. Since the problem-solving principle of the automatic working system is similar to the map generation method for a self-moving device, for the embodiment of the automatic working system, reference may be made to the embodiment of the map generation method for a self-moving device, and repeated parts are not described again. In this embodiment, the automatic working system may include: a self-moving device, a controller, and a signal receiver. The structure is described below.

The self-moving device may include a body and a moving apparatus. The moving apparatus may drive the self-moving device to move.

The controller may include a first control apparatus mounted in the self-moving device. The first control apparatus may control the moving apparatus to drive the self-moving device to move.

The signal receiver may be electrically connected to the controller, and is configured to receive the first coordinate data of the plurality of location points on the boundary of the working region of the self-moving device that is obtained by the first positioner. The signal receiver may be further configured to receive the second coordinate data of at least two location points of the plurality of location points that is obtained by the second positioner. The positioning precision of the first positioner is higher than the positioning precision of the second positioner.

The controller may be used to align the first coordinate data of the plurality of location points to a coordinate system in which the second coordinate data is located by using the second coordinate data of the at least two location points, to generate a target map of the working region.

In some embodiments of this specification, the second positioner may be mounted on the body of the self-moving device. The second positioner may be further configured to determine location data of the self-moving device during working. The first control apparatus may be further configured to compare the location data with coordinate data on the target map, to control the self-moving device to move in the working region.

In some embodiments of this specification, the first control apparatus is further configured to obtain a distance between the self-moving device and the boundary of the working region according to the location data and the coordinate data on the target map, and control the self-moving device to return to move within the boundary when it is determined that the distance is less than a first preset distance.

In some embodiments of this specification, the first preset distance is greater than or equal to a deviation, from the distance, caused by a positioning error of the second positioner.

Specifically, when the self-moving device works, the second positioner may be used to obtain the location data of the self-moving device during working. The first control apparatus may determine a distance between the self-moving device and the boundary of the working region according to the location data and the coordinate data on the target map, and when the distance is less than a first preset distance, the first control apparatus may control the self-moving device to return to move within the boundary. Since the location data of the self-moving device during operating is obtained by the second positioner, when the first preset distance as the reference distance is set, the first preset distance is set to be greater than or equal to a deviation, from distance between the self-moving device and the boundary of the working region, caused by the positioning error of the second positioner. With such setting, the misjudgment of whether the self-moving apparatus is within the boundary due to the positioning error of the second positioner can be avoided.

In some embodiments of this specification, the signal receiver may be disposed in the self-moving device.

In some embodiments of this specification, the controller may be disposed in the self-moving device.

Specifically, when the controller is disposed in the self-moving device, the controller in this embodiment is equivalent to the control apparatus 30 in FIG. 2. The control apparatus 30 in FIG. 2 can implement the function of the first control apparatus in the self-moving map generation system. That is, the control apparatus can control the moving apparatus to drive the self-moving device to move, can determine a distance between the self-moving device and the boundary of the working region according to the location data and the coordinate data on the target map, and can control, when the distance is less than a first preset distance, the self-moving device to return to move within the boundary. The control apparatus 30 in FIG. 2 may further align the first coordinate data of the plurality of location points to a coordinate system in which the second coordinate data is located by using the second coordinate data of the at least two location points, to generate a target map of the working region.

It can be learned from the foregoing description that, the embodiments of this specification achieve the following technical effects: The first coordinate data of the plurality of location points on the boundary of the working region of the self-moving device is obtained by using the first positioner, the second coordinate data of the at least two location points of the plurality of location points is determined based on the positioning system, and the obtained second coordinate data of the at least two location points and the first coordinate data of the plurality of location points are used to obtain the target map. In addition, since the positioning precision of the first positioner is higher than the positioning precision of the positioning system, the precision of the map can be improved, so that the working precision of the self-moving device that plans a route according to the generated map can be further improved, which is beneficial to improving the user experience.

An embodiment of this specification further provides a computer device. For details, reference may be made to a schematic diagram of a composition structure of a computer device based on the map generation method for a self-moving device provided in the embodiments of this specification shown in FIG. 11. The computer device may further include an input device 111, a processor 112, and a memory 113. The memory 113 is configured to store instructions executable by the processor. The processor 112, when executing the instructions, implements the steps of the map generation method for a self-moving device according to any one of the foregoing embodiments.

In this embodiment, the input device may specifically be one of main apparatuses for information exchange between a user and a computer system. The input device may include a keyboard, a mouse, a camera, a scanner, a light pen, a handwriting input board, a voice input apparatus, or the like. The input device is configured to input raw data and programs for processing the data into the computer. The input device may further obtain and receive data transmitted from other modules, units, and devices. The processor can be implemented in any suitable method, for example, the processor can take the form of, for example, a microprocessor or processor and a computer-readable medium storing computer-readable program code (for example, software or firmware) executable by the processor, a logic gate, a switch, an application-specific integrated circuit (ASIC), a programmable logic controller and an embedded microcontroller. Specifically, the memory may be a memory device used for storing information in a modern information technology. The memory may include a plurality of levels. In a digital system, any device that can store binary data can be a memory; in an integrated circuit, a circuit with a storage function without a physical form is also referred to as a memory, such as a RAM and a FIFO; and in the system, a storage device in a physical form is also referred to as a memory, such as a memory module and a TF card.

In this embodiment, the functions and effects specifically realized by the computer device may be explained in comparison with other embodiments, and details are not repeated herein.

An embodiment of this specification further provides a computer storage medium based on a map generation method for a self-moving device, where the computer storage medium stores computer program instructions, and the computer program instructions, when executed, implement the steps of the map generation method for a self-moving device according to any one of the foregoing embodiments.

In this embodiment, the storage medium includes, but is not limited to, a random access memory (RAM), a read-only memory (ROM), a cache, a hard disk (HDD), or a memory card. The memory may be used to store computer program instructions. A network communication unit may be an interface for performing network connection and communication, which is set according to standards stipulated in a communication protocol.

In this embodiment, the functions and effects specifically realized by the program instructions stored in the computer storage medium may be explained in comparison with other embodiments, and details are not repeated herein.

Apparently, a person skilled in the art should understand that the modules or steps in the embodiments of this specification may be implemented by a general-purpose computing apparatus, and may be co-located on a single computing apparatus or distributed on a network formed by a plurality of computing apparatuses. Optionally, the modules or steps may be implemented by using program code executable by a computing apparatus, and then may be stored in a storage apparatus and executed by a computing apparatus. In addition, in some cases, the shown or described steps may be performed in a sequence different from the sequence herein. Alternatively, the steps are separately manufactured into integrated circuit modules, or a plurality of modules or steps thereof are manufactured into a single integrated circuit module for embodiment. In this way, the embodiments of this specification are not limited to any combination of specific hardware and software.

It should be understood that the foregoing description is for purposes of illustration and not limitation. Many embodiments and many applications except the examples provided are apparent to a person skilled in the art. Therefore, the scope of this application should be determined not with reference to the foregoing description, but should be determined with reference to the preceding claims and the full scope of equivalents to which such claims are entitled.

The foregoing descriptions are merely preferred embodiments of this application, but are not intended to limit this application. A person skilled in the art may make various alterations and variations to the embodiments of this application. Any modification, equivalent replacement, or improvement made without departing from the spirit and principle of this application shall fall within the protection scope of this application.

## Claims

1. A map generation method for a self-moving device, comprising:
obtaining first coordinate data of a plurality of location points on a boundary of a working region of a self-moving device;
determining second coordinate data of at least two location points of the plurality of location points; and
aligning the first coordinate data of the plurality of location points to a coordinate system in which the second coordinate data is located by using the second coordinate data of the at least two location points, to generate a target map of the working region, wherein
positioning precision of a first positioner configured to obtain the first coordinate data of the plurality of location points is higher than positioning precision of a second positioner configured to obtain the second coordinate data of the at least two location points.

2. The method according to claim 1, wherein the target map is used for defining the boundary of the working region, and the self-moving device obtains location information by using the second positioner and determines a location in the target map according to the location information, to work within the boundary.

3. The method according to claim 1, wherein the obtaining first coordinate data of a plurality of location points on a boundary of a working region of a self-moving device comprises:
obtaining the first coordinate data of the plurality of location points by using the first positioner when the self-moving device moves along the boundary of the working region.

4. The method according to claim 1, wherein the first positioner is located within a preset region in the working region.

5. The method according to claim 3, wherein the obtaining the first coordinate data of the plurality of location points by using the first positioner when the self-moving device moves along the boundary of the working region comprises:
obtaining the first coordinate data of the plurality of location points by using the first positioner after the first positioner moves from a first location to a second location, wherein there is an obstacle between the first location and the self-moving device, and there is no obstacle between the second location and the self-moving device.

6. The method according to claim 1, wherein the at least two location points meet a preset location condition, and the preset location condition is at least one of the following conditions:
a distance between any two location points of the at least two location points is greater than a first preset distance;
an angle formed by any two location points of the at least two location points and the first positioner is greater than a preset angle; and
each location point of the at least two location points is located in an open region in the working region.

7. The method according to claim 1, wherein the determining second coordinate data of at least two location points of the plurality of location points comprises:
obtaining a plurality of positioning signals corresponding to the at least two location points from a positioning system by using the second positioner, wherein the plurality of positioning signals comprise a plurality of positioning signals that are received from the positioning system and correspond to the at least two location points when the second positioner separately stays at the at least two location points for a preset period of time; and
determining the second coordinate data of the at least two location points according to the plurality of positioning signals.

8. The method according to claim 7, wherein the positioning system comprises a satellite navigation system.

9. The method according to claim 1, wherein the at least two location points comprise at least three location points; and
correspondingly, the first coordinate data of the plurality of location points is aligned to a coordinate system in which the second coordinate data is located by using second coordinate data of the at least three location points, to generate a target map of the working region.

10. The method according to claim 1, wherein the first positioner comprises at least one of the following: an optical interferometer, a microwave interferometer, and a laser rangefinder.

11. A map generation system for a self-moving device, comprising: a first positioner, a second positioner, and a controller, wherein
the first positioner is configured to obtain first coordinate data of a plurality of location points on a boundary of a working region of a self-moving device, wherein positioning precision of the first positioner is higher than positioning precision of the second positioner;
the controller is communicatively connected to the first positioner and the second positioner;
the second positioner is configured to determine second coordinate data of at least two location points of the plurality of location points; and
the controller is configured to align the first coordinate data of the plurality of location points to a coordinate system in which the second coordinate data is located by using the second coordinate data of the at least two location points, to generate a target map of the working region.

12. The system according to claim 11, wherein the second positioner is detachably mounted in the self-moving device, the second positioner is further configured to obtain location information of the self-moving device when being mounted in the self-moving device, and the self-moving device determines a location in the target map according to the location information, to work in the working region defined by the target map.

13. An automatic working system, comprising a self-moving device, wherein the self-moving device comprises: a body; and a moving apparatus, configured to drive the self-moving device to move; and the automatic working system further comprises a controller, the controller comprises a first control apparatus mounted in the self-moving device, the first control apparatus is configured to control the moving apparatus to drive the self-moving device to move, and the automatic working system further comprises:
a signal receiver, electrically connected to the controller, and configured to receive first coordinate data of a plurality of location points on a boundary of a working region of the self-moving device that is obtained by a first positioner, wherein the signal receiver is further configured to receive second coordinate data of at least two location points of the plurality of location points that is obtained by a second positioner, the controller is configured to align the first coordinate data of the plurality of location points to a coordinate system in which the second coordinate data is located by using the second coordinate data of the at least two location points, to generate a target map of the working region, and positioning precision of the first positioner is higher than positioning precision of the second positioner.

14. The automatic working system according to claim 13, wherein the second positioner is configured to be mounted on the body, and is further configured to determine location data of the self-moving device during working; and the first control apparatus is further configured to compare the location data with coordinate data on the target map, to control the self-moving device to move in the working region.

15. The automatic working system according to claim 14, wherein the first control apparatus is further configured to obtain a distance between the self-moving device and the boundary of the working region according to the location data and the coordinate data on the target map, and control the self-moving device to return to move within the boundary when it is determined that the distance is less than a first preset distance.

16. The automatic working system according to claim 15, wherein the first preset distance is greater than or equal to a deviation, from the distance, caused by a positioning error of the second positioner.

17. A computer device, comprising a processor and a memory configured to store instructions executable by the processor, wherein the processor, when executing the instructions, implements the steps of the method according to any one of claims 1 to 10.

18. A computer-readable storage medium, storing computer instructions, wherein the instructions, when executed, implement the steps of the method according to any one of claims 1 to 10.
